# EUROPEAN PATENT SPECIFICATION

(11) **EP 0 492 760 B1**
(45) Date of publication and mention of the grant of the patent: **05.04.1995**
(21) Application number: 91304362.6
(22) Date of filing: 15.05.1991
(51) Int. Cl.: F16H 25/06

(54) **Speed reduction device**
Untersetzungsgetriebe
Dispositif réducteur de vitesse

(30) Priority: 27.12.1990 JP 418853/90
(43) Date of publication of application: 01.07.1992
(73) Proprietor: KAMOSEIKO KABUSHIKI KAISHA, Nishikamo-gun, Aichi-ken (JP)
(72) Inventor: Imase, Kenji, Nishikamo-gun, Aichiken (JP)
(74) Representative: Senior, Alan Murray

(56) References cited:
- EP-A- 0 078 168
- EP-A- 0 207 206
- WO-A-90/14532
- DE-C- 205 588
- PATENT ABSTRACTS OF JAPAN vol. 10, no. 59 (M-459)(2116) 8 March 1986 & JP-A-60 205 058 (TOSHIBA) see figure 8
- PATENT ABSTRACTS OF JAPAN vol. 13, no. 420 (M-872) 19 September 1989 & JP-A-01 159 419 (TANIMOTO KIYOSHI)

## Description

The invention relates to a speed reduction device which allows compactness with a relatively simple structure, and particularly concerns a speed reduction device which is capable of ensuring a high reduction ratio without loss of compactness.

In modern robot technology associated with various kinds of machine tools, speed reduction devices have been associated with electric motors to reduce their speed for use in, say, transfer arms. Examples of presently known devices are worm gear reducers, cyclo reducers, and harmonic drive reducers.

However, it would be desirable to have a speed reduction device which is improved in the following respects: (i) high reduction ratio with compact structure, (ii) high control precision with minimum play such as backlash, (iii) elevated rigidity with high meshing rate, (iv) improved controllability with a relatively small inertia force due to rotary members, (v) minimum loss of torque with minimum wear.

A reduction device which satisfies these advantages (i) - (v) is shown in U.S.P. 4,829,851, patented on May 16 1989, and which corresponds to Japanese Patent Application No. 141963/60 filed on June 27, 1985. In this patent, first and second discs are provided, each surface of which has a groove defined by a cycloidal-based curve. A plurality of balls are provided to roll along each groove of the first and second discs when an orbital movement is transmitted to the second disc so as to impart to the second disc a rotary and orbital movement. A rectifier disc picks up a rotational movement from the orbital and rotational movement of the second disc to produce a reduced speed output.

It is, however, often desired to ensure a greater reduction ratio of up to 1/50 - 1/100 in a reduction device, particularly in the case of machine tools. From the point of view of strength and machinability, it is thought difficult for the prior art reduction devices to ensure such a great reduction ratio without losing compactness.

DE-C-205588 shows a speed reduction device in which an orbital disk is driven by an eccentric, and is constrained to rotate at a fraction of its orbital speed by the engagement of projections in a trefoil groove in a reaction disk. The rotary motion is transmitted to an output member by a rectifier disk.

Therefore, it is an aim of the invention to provide a differential speed reduction device which allows high control precision with minimum backlash, high rigidity at high meshing rates, improved controllability with small inertia force, and a greater reduction ratio with a compact structure.

According to the present invention, there is provided a gearless speed reduction device comprising:
a reaction member and an orbital disc member located to oppose each other; a rectifier member; and a drive connection between the orbital disc member and at least one of said reaction and rectifier members including one or more projections extending from one of said orbital disc member and said at least one of said reaction and rectifier members, and a groove provided in the other one of said orbital disc member and said at least one of said reaction and rectifier members, the groove being defined by a cycloidal curve; the projection(s) engaging the groove and to being adapted to travel along the groove when an orbital motion is imparted to the orbital disc member whereby to impart a rotary motion to the rectifier member so as to drive an output member; characterised in that the or each projection comprises a ball seated in a respective recess in the member from which the projection(s) extend(s).

When power is transmitted to the second disc, each of the ball bearings slides along the groove to impart to the second disc an orbital and rotary movement. The rotary movement is picked up from the movement of the second disc so as to produce it as a reduced speed output.

When the groove is provided on the reaction member and the balls provided in the recesses in the orbital disc, the output is reduced by the number of single lobes. When the groove is provided on the orbital disc and the balls in recesses in the reaction member, the reduction ratio is calculated by the inverse of the number of balls; otherwise it is calculated by the number of lobes in the groove. Thus it is possible to ensure a greater reduction ratio without sacrificing the compactness of structure.

The orbital disc usually carries a high load, but in this case the balls roll within the recesses by surface-to-surface contact thus enhancing the torque capacity with minimum loss of torque transmission.

With the enhancement of the torque capacity, it is unnecessary to make the orbital disc from a hard material, thus reducing cost of materials and machining time with a high machining precision.

It is possible to machine the recesses rapidly with a simple operation, as opposed to the case in which it is required to machine the cycloidal-based groove on each of the discs.

The invention will be further understood from the following description, when taken together with the attached drawings, which are given by way of example only and in which:
Figure 1 is a longitudinal cross sectional view of a speed reducer device according to a first embodiment of the invention;
Figure 2 is an exploded perspective view of the speed reducer device;
Figures 3a and 3b are explanatory views showing a positional relationship among a groove, semi-spherical recesses and rollable balls;
Figure 3c is a longitudinal cross sectional view of a speed reducer device to show a modified form of a groove;
Figure 4 is a view similar to Figure 2 according to a second embodiment of the invention;
Figure 5 is a longitudinal cross sectional view of a speed reducer device according to a third embodiment of the invention;
Figure 6 is a view similar to Figure 2 according to the third embodiment of the invention;
Figure 7 is a view similar to Figure 1 according to a fourth embodiment of the invention, with a casing removed;
Figure 8 is a view similar to Figure 7 according to a fifth embodiment of the invention;
Figure 9 is a view of similar to Figure 7 according to a sixth embodiment of the invention; and
Figure 10 is an exploded perspective view of a rectifier member according to the sixth embodiment of the invention.

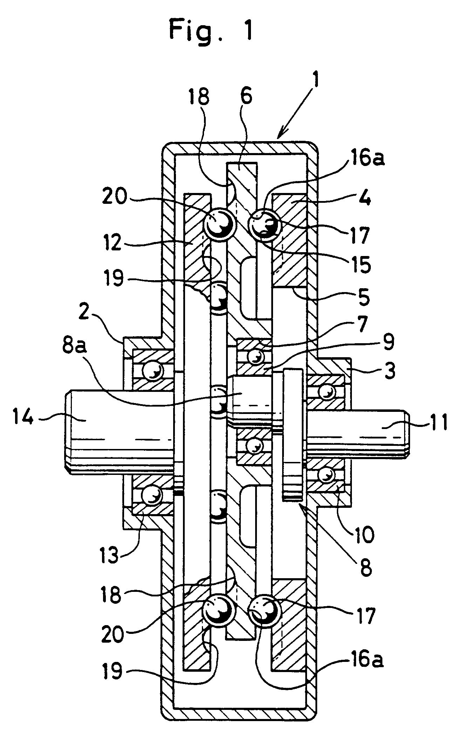

Referring first to Fig. 1, numeral 1 designates a box-shaped casing. Support flanges 2, 3 are provided on horizontally opposed walls of the casing 1. An annular disc 4, which is made of a steel to serve as a first disc, is disposed in the casing 1, and rigidly secured to the right wall of the casing 1 as shown so as to communicate its central aperture 5 with the flange 3. A circular disc 6 has a central boss 7, and is disposed in the casing 1 to face the disc 4. The disc 6 is made of a metallic steel the same as the disc 4 to serve as a second disc. An eccentric shaft 8 is placed in the casing 1 in the aperture 5 of the disc 4. The shaft 8 is mounted at one end 8a on the boss 7 of the disc 6 through a bearing 9, and at the other end on the flange 3 through a bearing 10 to act as an input portion 11. In this instance, the shaft 8 directs its eccentricity to correspond to that of a sinuous groove to be described in detail hereinafter. A rectifier disc 12 is placed in the casing 1 to face the circular disc 6, and has a central output shaft 14 mounted on the flange 2 through a bearing 13.

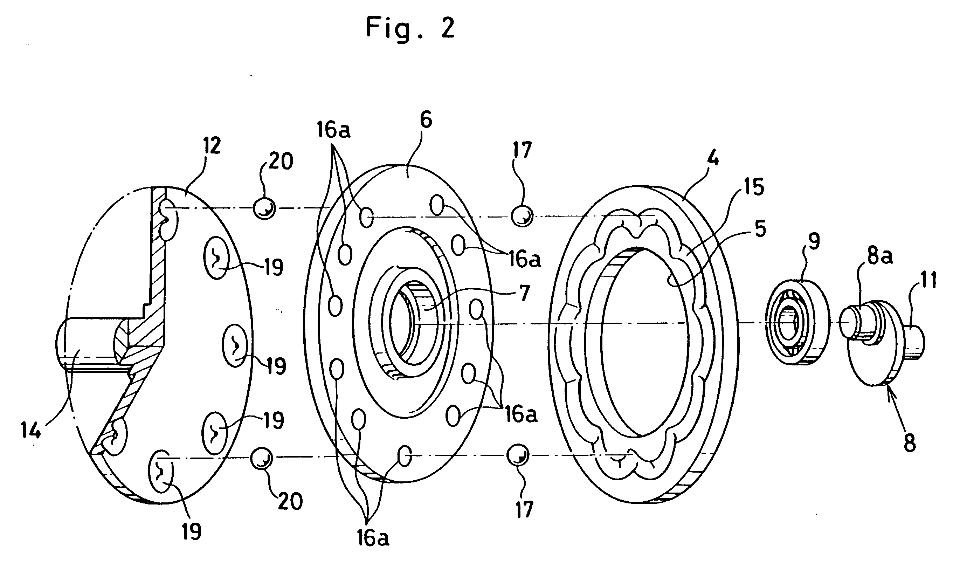

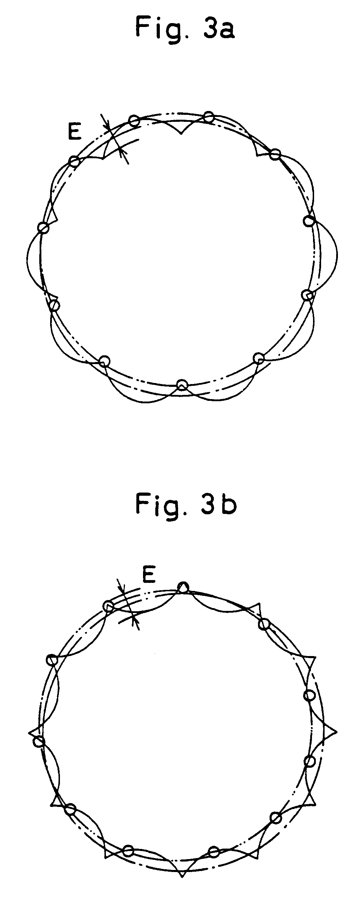

Now, on the surface of the disc 4, is a sinuous groove 15 semi-circular in section provided as seen in Fig. 2. The sinuous groove 15 thus provided is defined by an epicycloidal curve continuously formed in the disc 4 along a predetermined pitch circle as shown in Fig. 3a, and having ten lobes. The groove 15 has both inner and outer walls, and having an upper open width somewhat smaller than a spherical diameter of a rollable ball 17 described in detail hereinafter. The semi-circular section of the groove 15 has a radius of curvature substantially identical to that of the ball 17. In this instance, the groove may be defined by a hypocycloidal curve continuously formed in the disc along a pitch circle indentical to that mentioned above but provided with twelve lobes by way of illustration.

Regarding the epicycloidal and hypocycloidal curves, they are each obtained by rolling one circle on another circle in circumscribing and inscribing relationship therewith as shown in Figs. 3a, 3b in which the height of the lobe is designated as (E), the amount of which acts as an eccentricity.

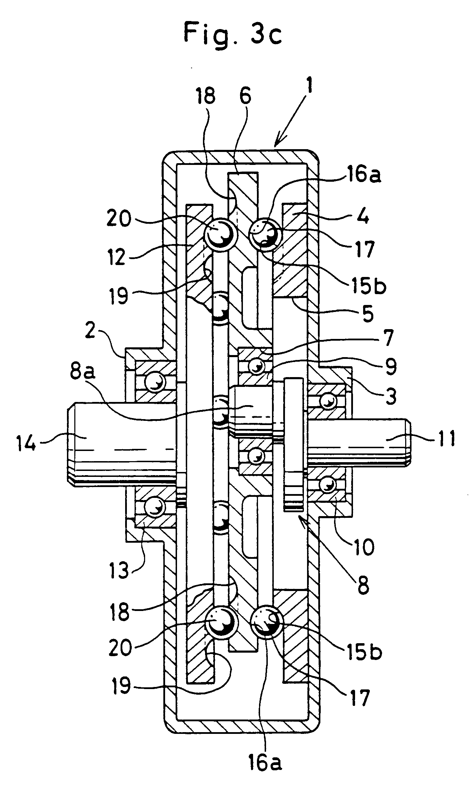

As for the cross sectional shape of the groove 15, the section may be V-shaped arch so that the ball rolls along the groove by two-point contact. The groove may have only the inner wall to serve as an inner race as indicated at 15b in Fig. 3c which is a modified form of the groove.

In the meanwhile, the disc 6 has an opposing surface facing to the disc 4 so as to form a plurality of, e.g. eleven semi-spherical recesses 16a on the opposing surface along a pitch circle, a radius of which is the same as that of the groove 15. The semi-spherical recesses 16a are positioned at regular intervals, and having a depth somewhat smaller than a spherical radius of the rollable ball 17 but having a radius of curvature substantially identical to that of the ball 17. In this instance, in order to impart a friction-resistant property with the groove 15 and the recesses 16a, the discs 4, 6 may be treated with case-hardening such as, for example, quenching, nitriding or carburizing.

Between the discs 4 and 6, are spherical balls 17 which are made from, for example, a metallic steel, positioned in both the groove 15 and recesses 16a. The number of the balls 17 is corresponding to that of the recesses 16a. Each of the balls 17 is adapted to roll within the corresponding recess 16a, and rolling along the groove 15 upon a rotational movement of the disc 4.

These balls 17 are located at intersections in which the pitch circle of the recesses 16a meets the epicycloidal curve of the groove 15 as shown at dots in Fig. 3a. When the groove is defined by the hypocycloidal curve, the balls 17 are located at intersections in which the pitch circle of the recesses 16a meets the hypocycloidal curve of the groove as shown at dots in Fig. 3b.

On the opposing surfaces of the disc 6 and the rectifier disc 12, are identical groups of annular grooves 18, 19 provided, the effective diameters of which correspond to the eccentricity between the pitch circle of the groove 15 and that of the recesses 16a. Between the disc 6 and the rectifier disc 12, are rigid steel balls 20 positioned in the annular grooves 18, 19 so as to roll along the grooves 18, 19 with the movement of the disc 6.

With the structure incorporated, for instance, into a transfer robot, the eccentric shaft 8 is drivingly connected to an electric motor via the input shaft 11 while the rectifier disc 12 connects its output shaft 14 to a transfer arm (not shown).

The motor, once energized, allows the shaft 8 to rotate in one direction so as to transmit its rotation to the second disc 6 through the end portion 8a. The disc 6, is thus caused to orbit about the axis of the shaft 11, but rotate around the end portion 8a due to the oscillating relationship between the groove 15 and the recesses 16a interconnected as they are by the balls 17. During this process, each of the balls 17 rolls within the corresponding recess 16a, and at the same time, rolling along the groove 15 imparts to the disc 6 a rotational motion about its own axis.

The disc 6 thus moved, on the other hand, causes the balls 20 to roll around the annular grooves 18, 19 and transmits only a rotational force to the rectifier disc 12 in the direction identical to that of the eccentric shaft 8, cancelling the component of the eccentric movement of the disc 6. This permits the shaft 14 of the rectifier disc 12 to rotate, and thereby, for instance activate a transfer arm for carrying such as, for example, an assembly part from one station to another.

In this instance, the reduction ratio is determined by the number of balls 17 placed in the recesses 16a, and calculated by an inverse number of the balls 17 when the groove 15 is provided on the first disc 4 while the recesses 16a provided on the second disc 6. According to the embodiment of the invention, the number of eleven balls 17 leads the reduction ratio to 1/11. Similarly the number of ten balls leads the reduction ratio to 1/10 while the number of fifteen balls leads the reduction ratio to 1/15. As a theory goes like this, a reduction ratio of 1/100 requires the number of one hundred balls, the balls, however, may in fact be positioned every other ball position, every four or every twenty positions where they would have been position, respectively, the required number of balls being 50, 25 or 5 as appropriate.

The required number of the lobes of the groove 15 depends on that of the balls positioned in the recesses 16 or the required reduction ratio, as outlined above. It is calculated by deducting one from the inverse of the reduction ratio, in which case, the groove 15 is defined by the epicycloidal curve.

The number of the lobes of the groove 15 is decided by calculating (11 - 1 = 10) since the number of the balls 17 is eleven. Similarly a reduction ratio of 1/10 leads the required number of lobes to nine (10 - 1 = 9) while a reduction ratio of 1/15 leads the required number of lobes to fourteen (15 - 1 = 14). When the desired reduction ratio is as high as 1/100, the required number of lobes is ninety-nine (100 - 1 = 99).

In the prior device shown in U.S.P. No. 4,829,851 (patented on May 16, 1989), the required number of the lobes in the groove is twice as many as the inverse number of the reduction ratio. When the desired reduction ratio is 1/10, the required number of the lobes of the groove provided on one disc has to be twenty while that provided on other disc either eighteen or twenty-two. When the desired reduction ratio is 1/50, the required number of the lobes in the groove provided on one disc has to be one hundred while that provided on other disc either ninety-eight or one hundred and two.

Thus the number of the lobes of the grooves has to be very high in order to ensure a high reduction ratio, thus rendering it difficult to machine the grooves, and at the same time, obliging the spherical dimensions of the balls to be reduced thus leading to a loss of transmission torque.

On the contrary, according to the embodiment of the invention, the required number of lobes of the groove is half the number of the lobes of the prior art grooves without reducing the spherical dimensions of the balls. This allows a reduction ratio of 1/100 in a space equivalent to that required for a ratio of 1/50 in the prior art.

As apparent from the description, the structure is such that the disc 4 and are arranged in opposing relationship, allowing the thickness to be reduced for compactness and giving a relatively high reduction ratio.

Further, connection between the disc 4 and 6 is such that play such as, for example, backlash between the discs is reduced thus defining the rotational angle of the output shaft 14 with high precision.

In addition, the structure is such that the discs 4 and 6 are positively connected through the balls 17 in substantially solid relationship, to be of high rigidity as a whole while elevating the meshing rate due to the balls 17 being tightly placed at the groove 16 and the recesses 16a.

Furthermore, the thickness-reduced discs 4 and 6 need only small inertia force themselves, thus improving their controllability.

Still further, small friction of the balls 17 against the discs 4 and 6 makes it possible to produce an effective speed reduction with a minimum loss of torque.

Under the circumstances that the second disc 6 usually carries a high load, each of the balls 17 rolls within the corresponding semi-spherical recess 16a by surface-to-surface contact thus enhancing load-carrying with minimum loss of transmission torque.

With the enhancement of the load carrying ability, it becomes unnecessary to make the second disc 6 from a hard iron-based metal, thus reducing cost of material and machining time with a high machining precision.

Further, it is possible to machine the semi-spherical recesses 16a rapidly with a simple operation, whereas in the prior art it is necessary to machine cycloid-based grooves on each of the discs.

The balls 17 are self-positioning, once in place in the semi-spherical recesses 16a, so that no member such as cage and retainer is needed to retain the balls at regular intervals thus reducing the number of assembly parts, and contributing to cost-saving.

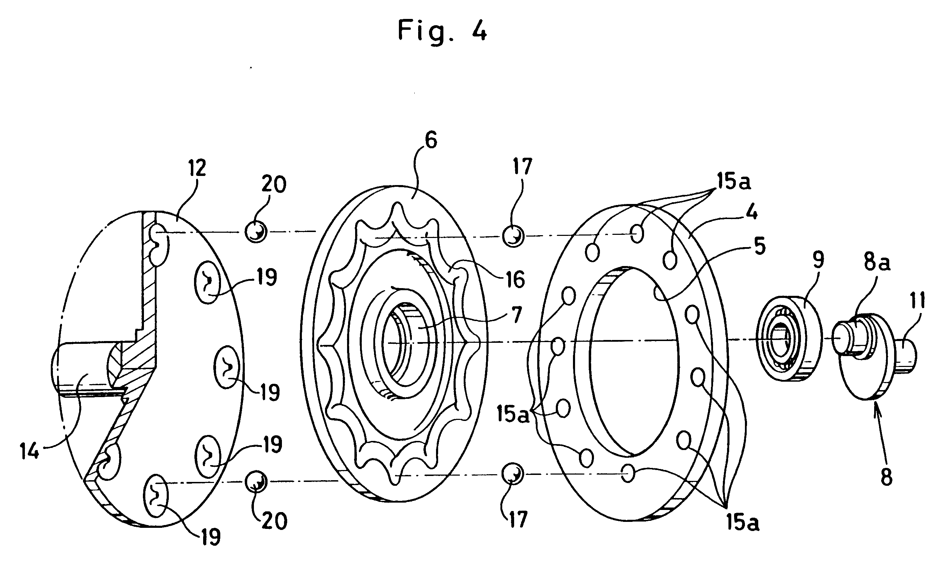

Fig. 4 shows a second embodiment of the invention in which like reference numerals are identical to those in the first embodiment of the invention.

In this second embodiment, eleven semi-spherical recesses 15a are provided on the surface of the first disc 4 while a hypocycloidal-based groove 16 is provided on the surface of the second disc 6.

In this instance, the reduction ratio is determined by the number of the lobes of the groove 16.

When the desired reduction ratio is 1/10, the required number of the lobes is ten. The desired reduction ratio of 1/12 leads the required number of the lobes to twelve while the desired reduction ratio of 1/15 leads the required number of the lobes to fifteen. The rotational direction of the output is opposite to that of the input. Therefore if the input shaft 11 were rotated in one direction the output shaft 14 would rotate in the other direction.

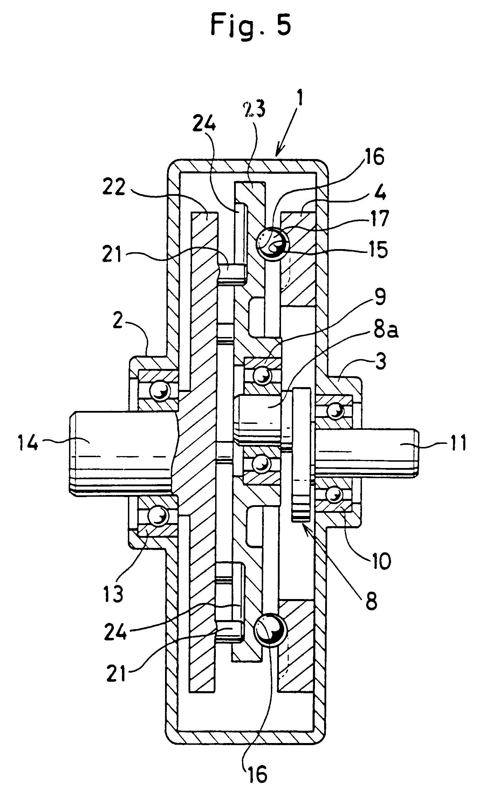

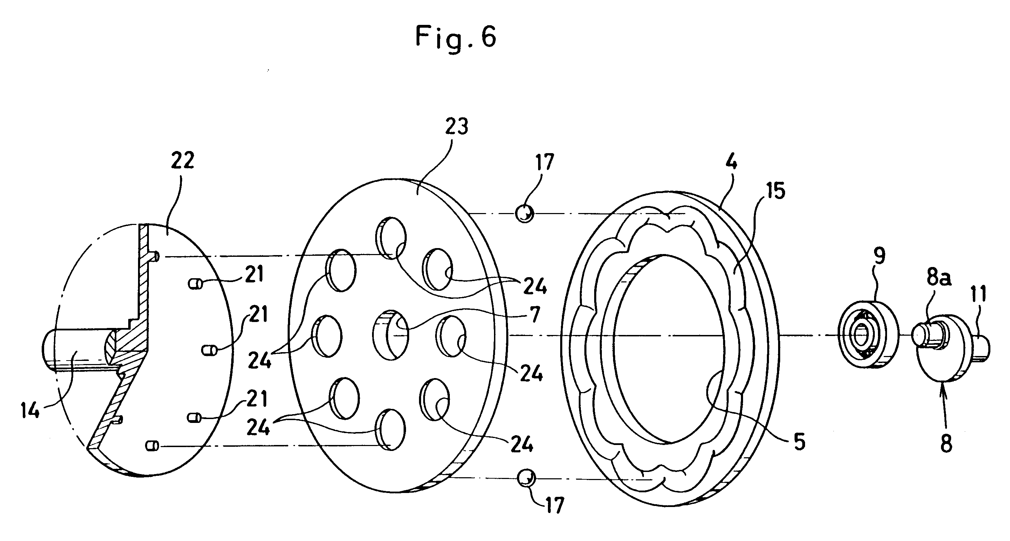

Figs. 5, 6 show a third embodiment of the invention wherein like parts are indicated by like reference numerals and in which instead of balls 20, pins 21 are employed on the rectifier disc here shown at 22 in place of the annular grooves 19. The pins 21 are parallel with the output shaft 14. A second disc 23 has circular concavities 24 into each of which a corresponding pin 21 is admitted, to allow each pin to relatively move along circumferential wall of the corresponding concavity 24 upon movement of the second disc 23. The effective diameter of the concavity 24 is equivalent to the eccentricity between the groove 15 and the recesses 16a. With an orbital movement transmitted to the second disc 23, the disc 23 is imparted with a rotational movement about its axis so that the circumferential wall of the concavity 24 slides along an outer surface of the pin 21 to transmit only a rotational movement to the rectifier disc 22.

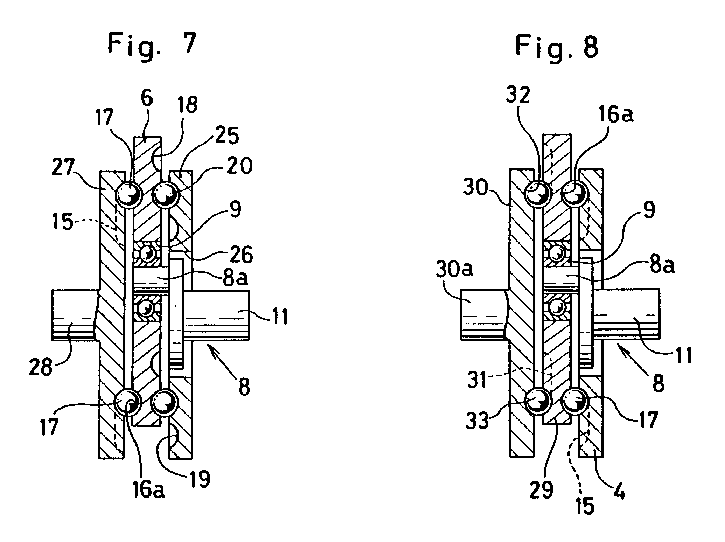

Fig. 7 shows a fourth embodiment of the invention in which the grooves of the circular disc 4 and the rectifier disc 12 of the first embodiment of the invention are permuted. A reaction member 25 has a central hollow portion 26, while a rectifier disc 27 has a central output shaft 28 in place of the central hollow 5 of the first embodiment.

Fig. 8 shows a fifth embodiment of the invention in which discs are arranged in series to establish a composite speed reduction ratio. In this embodiment, a groove 31 and semi-spherical recesses 32 are provided on each surface of a second disc 29 and a rectifier disc 30 respectively instead of the annular grooves 18, 19 of the first embodiment.

Between the discs 29, 30, are rollable balls 33 arranged to position each of the balls in both the corresponding recess 32 and the groove 31.

The rotational input from the eccentric shaft 8 is reduced by the first and second discs 4, 29. The input speed, thus reduced is further reduced by the second disc 29 and the rectifier disc 30 so that a significantly reduced output is produced from an output shaft 30a formed on the rectifier disc 30.

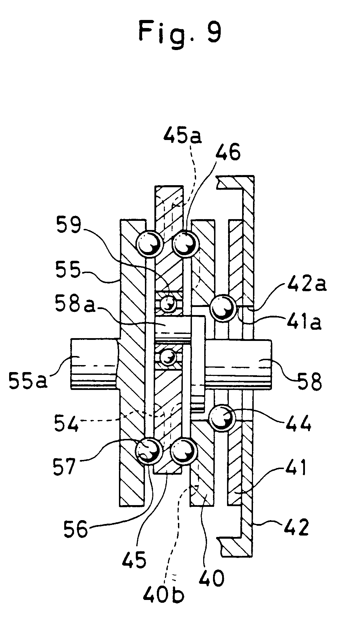

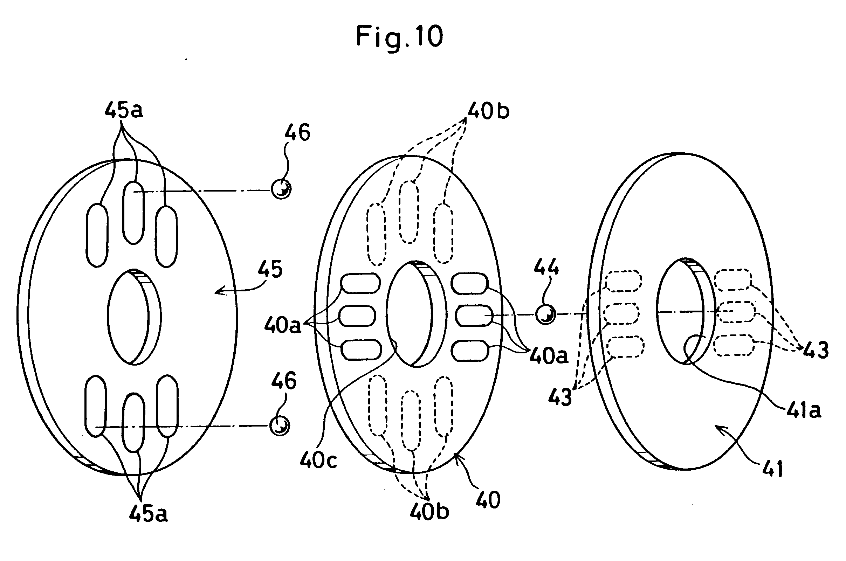

Figs. 9, 10 show a sixth embodiment of the invention wherein a reaction member comprises two annular discs including an oscillatory disc 40. Numeral 41 designates a support disc fixed to a casing 42 which carries a central aperture 42a. On one surface of the support disc 41, are two sets of three slits 43 provided in a diametrically opposed relationship with the aperture 42a interposed. The oscillatory disc 40 is arranged to face the support disc 41, and having a central aperture 40c, one surface of which has slits 40a corresponding to the slits 43 while the other surface of the disc 41 has two sets of three slits 40b provided perpendicularly to the slits 40a. Each of shuttle balls 44 are positioned in both slits 40a and the slits 43. A first disc 45 is arranged to face the oscillatory disc 40. Slits 45a provided on one surface of the first disc 45 are engageable with the slits 40b of the oscillatory disc 40 via shuttle balls 46. On the other surface of the first disc 45, is a groove 54 provided which is, by way of rollable balls 57, engageable with semi-spherical recesses 56 formed on a rectifier disc 55 which has an output shaft 55a to serve as an output generating member. Numeral 58 designates an eccentric shaft which has an eccentric end 58a passing through the apertures 42a, 41a and 40c, and mounted on a central boss of the disc 45 by means of a bearing 59.

It is appreciated that a cage or a retainer may be used to place rectifier balls 20 in position so as to make mounting operation easy when the balls are placed in the annular grooves 18, 19 as described in the first embodiment.

It is further noted that the annular grooves 18, 19 may be in the form of V-shaped arch in cross section to make the rectifier balls come into two-point contact with the inner walls of the grooves.

It is also noted that the rollable and rectifier balls may be made from tough and wear-resistant ceramic material with silicon nitride as a main component.

## Claims

1. A speed reduction device comprising:
a reaction member (4,25; 40,41) and an orbital disc member (6,23,29,45) located to oppose each other; a rectifier member (12,22,27,30,55); and a drive connection between the orbital disc member and at least one of said reaction and rectifier members including one or more projections (17,33,57) extending from one of said orbital disc member or said at least one of said reaction and rectifier members, and a groove (15,16,31,54) provided in the other one of said orbital disc member or said at least one of said reaction and rectifier members, the groove being defined by a cycloidal curve; the projection(s) engaging the groove and being adapted to travel along the groove when an orbital motion is imparted to the orbital disc member whereby to impart a rotary motion to the rectifier member so as to drive an output member; characterized in that the or each projection comprises a ball (17,33,57) seated in a respective recess (15a,16a) in the member from which the projection(s) extend(s).

2. A speed reduction device according to claim 1, wherein the groove 15 provided on the reaction member while the ball are provided on the orbital disc member.

3. A speed reduction device according to claim 1, wherein the ball(s) are provided on the reaction member while the groove is provided on the orbital disc member.

4. A speed reduction device according to claim 1, 2 or 3 wherein the groove is defined by a hypocycloidal curve or an epicycloidal curve.

5. A speed reduction device according to any preceding claim wherein the rectifier member comprises a rectifier disc (22) located to oppose the surface of the orbital disc member (23) remote from the reaction member (4), a plurality of circular cavities (24) being provided on the surface of the orbital disc member, pins (21) being provided on the opposing surface of the rectifier member to correspond to the cavities, the pins being adapted to slide along the circumferential wall of a corresponding cavity whereby the rotational movement of the orbital disc member is imparted to the rectifier.

6. A speed reduction device according to any of claims 1 to 4, wherein the rectifier member (12) comprises a rectifier disc located to oppose the surface of the orbital disc member (6) remote from the reaction member, a plurality of annular grooves (19) being provided on the surface of one member, further annular grooves (18) being provided on the surface of the other member to correspond to the annular grooves of the first member, corresponding grooves being adapted to carry therebetween a ball (20) each, which ball is adapted to roll around the annular grooves when the orbital disc is to transmit a rotary motion to the rectifier.

7. A speed reduction device according to any one of the preceding claims wherein the recess(es) (15a,16a) are part spherical and of substantially the same radius of curvature as the ball(s).

8. A speed reduction device according to any preceding claim, wherein the balls are made of a steel, or of a friction-resistant ceramic material with silicon nitride as a main component.

9. A speed reduction device according to any preceding claim, wherein the reaction and orbital disc members are made of a metallic material, and case-hardened at the grooves and recesses.

10. A speed reduction device according to any preceding claim wherein the cross sectional shape of the groove is semi-circular, the radius of curvature being substantially identical to that of the ball engaged therewith, or in the form of V-shape along which the ball engaged therewith rolls by two-point contact.

11. A speed reduction device according to claim 1, wherein the reaction member is provided between the orbital disc (45) and an inner wall of a casing (42), the reaction member comprising an oscillatory disc (40) and support disc (41) fixed to the inner wall of the casing (42), opposing surfaces of the orbital disc (45) and the oscillatory disc (40) having a first set of slits (45a,40b), while the opposing surfaces of the oscillatory disc (40) and the support disc (41) have a second set of slits (40a,43) arranged to be perpendicular to the first slits (45a,40b), and shuttle balls (46,44) disposed in the fist set of slits (45a,40b) and the second set of slits (40a,43).

12. A machine comprising a speed change device according to any one of the preceding claims.

## Patentansprüche

1. Vorrichtung zur Verminderung der Drehzahl, umfassend:
ein Reaktionselement (4,25; 40,41) und ein Drehscheibenelement (6,23,29,45), die einander gegenüberliegend angeordnet sind; ein Gleichrichterelement (12,22,27,30,55); und eine Antriebsverbindung zwischen dem Drehscheibenelement und mindestens einem von dem Reaktions- und dem Gleichrichterelement, die einen oder mehrere Vorsprünge (17,33,57) umfaßt, die von einem von dem Drehscheibenelement oder dem mindestens einen von dem Reaktions- und dem Gleichrichterelement ausgehen, und eine Nut (15,16,31,54) in dem anderen von dem Drehscheibenelement oder dem mindestens einen von dem Reaktions- und dem Gleichrichterelement, wobei die Nut durch einen zykloiden Bogen gebildet wird; wobei der Vorsprung bzw. die Vorsprünge in die Nut eingreift bzw. eingreifen und sich an der Nut entlang bewegen kann bzw. können, wenn eine Drehbewegung auf das Drehscheibenelement ausgeübt wird, so daß das Gleichrichterelement in Drehung versetzt wird, um ein Abtriebselement in Bewegung zu setzen; dadurch gekennzeichnet, daß der bzw. jeder Vorsprung eine in einer entsprechenden Ausnehmung (15a, 16a) in dem Element, von dem der Vorsprung bzw. die Vorsprünge ausgeht bzw. ausgehen, sitzende Kugel (17,33,57) umfaßt.

2. Vorrichtung zur Verminderung der Drehzahl nach Anspruch 1, bei der die Nut an dem Reaktionselement vorgesehen ist, während die Kugeln an dem Drehscheibenelement vorgesehen sind.

3. Vorrichtung zur Verminderung der Drehzahl nach Anspruch 1, bei der die Kugel(n) an dem Reaktionselement vorgesehen ist bzw. sind, während die Nut an dem Drehscheibenelement vorgesehen ist.

4. Vorrichtung zur Verminderung der Drehzahl nach Anspruch 1, 2 oder 3, bei der die Nut durch einen hypozykloidalen Bogen oder einen epizykloidalen Boden gebildet wird.

5. Vorrichtung zur Verminderung der Drehzahl nach einem der vorhergehenden Ansprüche, bei der das Gleichrichterelement eine Gleichrichterscheibe (22) umfaßt, die der Oberfläche des von dem Reaktionselement (4) entfernt liegenden Drehscheibenelementes (23) gegenüberliegt, wobei eine Vielzahl von kreisrunden Hohlräumen (24) auf der Oberfläche des Drehscheibenelementes vorgesehen ist und auf der gegenüberliegenden Oberfläche des Gleichrichterelementes Stifte (21) vorgesehen sind, die den Hohlräumen entsprechen, wobei die Stifte sich entlang der Umfangswand eines entsprechenden Hohlraumes bewegen können, so daß die Drehbewegung des Drehscheibenelementes auf den Gleichrichter übertragen wird.

6. Vorrichtung zur Verminderung der Drehzahl nach einem der Ansprüche 1 bis 4, bei der das Gleichrichterelement (12) eine Gleichrichterscheibe umfaßt, die der Oberfläche des von dem Reaktionselement entfernt liegenden Drehscheibenelementes (6) gegenüberliegt, wobei eine Vielzahl von ringförmigen Nuten (19) auf der Oberfläche eines Elementes vorgesehen ist und weitere ringförmige Nuten (18) auf der Oberfläche des anderen Elementes vorgesehen sind, die den ringförmigen Nuten des ersten Elementes entsprechen, wobei die entsprechenden Nuten jeweils zwischen sich eine Kugel (20) tragen können, die um die ringförmigen Nuten herumrollen kann, wenn die Drehscheibe eine Drehbewegung auf den Gleichrichter übertragen soll.

7. Vorrichtung zur Verminderung der Drehzahl nach einem der vorhergehenden Ansprüche, bei der die Ausnehmung(en) (15a,16a) zum Teil kugelförmig ist bzw. sind und im wesentlichen den gleichen Krümmungsradius besitzt bzw. besitzen wie die Kugel(n).

8. Vorrichtung zur Verminderung der Drehzahl nach einem der vorhergehenden Ansprüche, bei der die Kugeln aus Stahl oder aus einem reibungsbeständigen keramischen Material bestehen, dessen Hauptbestandteil Siliciumnitrid ist.

9. Vorrichtung zur Verminderung der Drehzahl nach einem der vorhergehenden Ansprüche, bei der das Reaktionselement und das Drehscheibenelement aus einem metallischen Material bestehen und an den Nuten und Ausnehmungen einsatzgehärtet sind.

10. Vorrichtung zur Verminderung der Drehzahl nach einem der vorhergehenden Ansprüche, bei der die Nut im Querschnitt halbkreisförmig ist, wobei der Krümmungsradius im wesentlichen identisch ist mit dem Krümmungsradius der damit in Eingriff befindlichen Kugel, oder V-förmig, so daß die Kugel durch Kontakt an zwei Punkten an der V-förmigen Nut entlangrollt.

11. Vorrichtung zur Verminderung der Drehzahl nach Anspruch 1, bei der das Reaktionselement zwischen der Drehscheibe (45) und einer Innenwand eines Gehäuses (42) vorgesehen ist, wobei das Reaktionselement eine Schwingscheibe (40) und eine an der Innenwand des Gehäuses (42) befestigte Stützscheibe (41) umfaßt, wobei die einander gegenüberliegenden Oberflächen der Drehscheibe (45) und der Schwingscheibe (40) einen ersten Satz Schlitze (45a,40b) aufweisen, während die einander gegenüberliegenden Oberflächen der Schwingscheibe (40) und der Stützscheibe (41) einen zweiten Satz Schlitze (40a,43) aufweisen, die senkrecht zu den ersten Schlitzen (45a,40b) angeordnet sind, und sich hin- und herbewegende Kugeln (46,44), die in dem ersten Satz Schlitze (45a,40b) und dem zweiten Satz Schlitze (40a,43) angeordnet sind.

12. Maschine mit einer Vorrichtung zur Änderung der Drehzahl nach einem der vorhergehenden Ansprüche.

## Revendications

1. Dispositif réducteur de vitesse, comprenant:
un élément de réaction (4,25; 40,41) et un élément formant disque orbital (6,23,29,45) en regard l'un de l'autre; un élément de redressement (12,22,27,30,55); et une liaison d'entraînement entre l'élément formant disque orbital et au moins un desdits éléments de réaction et de redressement comportant une ou plusieurs saillies (17,33, 57) s'étendant depuis l'élément formant disque rotatif ou depuis l'un au moins desdits éléments de réaction et de redressement, et une gorge (15,16,31,54) réalisée respectivement dans l'un au moins desdits éléments de réaction et de redressement ou ledit élément formant disque orbital, la gorge étant définie par une courbe cycloïdale; la/les saillie(s) pénétrant dans la gorge et étant conçues pour se déplacer le long de la gorge lorsqu'un mouvement de rotation est communiqué à l'élément formant disque orbital pour communiquer de ce fait un mouvement de rotation à l'élément de redressement afin d'entraîner un élément de sortie ; caractérisé en ce que la saillie ou chaque saillie comporte une bille (17,33,57) logée dans un évidement correspondant (15a,16a) de l'élément depuis lequel s'étend(ent) la/les saillie(s).

2. Dispositif réducteur de vitesse selon la revendication 1, dans lequel la gorge est réalisée sur l'élément de réaction tandis que les billes sont disposées sur l'élément formant disque orbital.

3. Dispositif réducteur de vitesse selon la revendication 1, dans lequel la/les billes(s) est/sont disposée(s) sur l'élément de réaction tandis que la gorge est réalisée sur l'élément formant disque orbital.

4. Dispositif réducteur de vitesse selon la revendication 1, 2 ou 3, dans lequel la gorge est définie par une courbe hypocycloïdale ou une courbe épicycloïdale.

5. Dispositif réducteur de vitesse selon l'une quelconque des revendications précédentes, dans lequel l'élément redresseur comprend un disque redresseur (22) placé pour se trouver en regard de la surface de l'élément formant disque orbital (23) à distance de l'élément de réaction (4), plusieurs cavités circulaires (24) étant réalisées sur la surface de l'élément formant disque orbital, des ergots (21) étant présents sur la surface de l'élément de redressement située en regard de façon à correspondre aux cavités, les ergots étant conçus pour coulisser sur la paroi périphérique d'une cavité correspondante, grâce à quoi le mouvement de rotation de l'élément formant disque orbital est communiqué au redresseur.

6. Dispositif réducteur de vitesse selon l'une quelconque des revendications 1 à 4, dans lequel l'élément de redressement (12) comporte un disque redresseur placé de façon à être en regard de la surface de l'élément formant disque orbital (6) à distance de l'élément de réaction, plusieurs gorges annulaires (19) étant réalisées sur la surface d'un premier élément, d'autres gorges annulaires (18) étant réalisées sur la surface de l'autre élément pour correspondre aux gorges annulaires du premier élément, des gorges correspondantes étant conçues pour porter entre elles une bille (20) chacune, laquelle bille est conçue pour tourner en roulant le long des gorges annulaires lorsque le disque orbital doit transmettre un mouvement de rotation au redresseur.

7. Dispositif réducteur de vitesse selon l'une quelconque des revendications précédentes, dans lequel l'évidement/les évidements (15a,16a) est/sont partiellement sphérique(s) et a/ont sensiblement le même rayon de courbure que la/les bille(s).

8. Dispositif réducteur de vitesse selon l'une quelconque des revendications précédentes, dans lequel les billes sont en acier, ou en matière céramique résistant au frottement principalement constituée de nitrure de silicium.

9. Dispositif réducteur de vitesse selon l'une quelconque des revendications précédentes, dans lequel l'élément de réaction et l'élément formant disque orbital sont en matière métallique et sont cémentés au niveau des gorges et des évidements.

10. Dispositif réducteur de vitesse selon l'une quelconque des revendications précédentes, dans lequel la gorge a une section transversale semi-circulaire, le rayon de courbure étant sensiblement identique à celui de la bille engagée dans celle-ci, ou en forme de V, la bille engagée dans celle-ci roulant par deux points de contact.

11. Dispositif réducteur de vitesse selon la revendication 1, dans lequel l'élément de réaction est disposé entre le disque orbital (45) et une paroi intérieure d'un boîtier (42), l'élément de réaction comprenant un disque oscillant (40) et un disque de support (41) fixé à la paroi intérieure du boîtier (42), les surfaces opposées du disque orbital (45) et du disque oscillant (40) ayant un premier ensemble de fentes (45a,40b), tandis que les surfaces opposées du disque oscillant (40) et du disque de support (41) ont un deuxième ensemble de fentes (40a,43) ménagées pour être perpendiculaires aux premières fentes (45a,40b), et des billes-navettes (46,44) disposées dans le premier ensemble de fentes (45a,40b) et le deuxième ensemble de fentes (40a,43).

12. Machine comportant un dispositif de changement de vitesse selon l'une quelconque des revendications précédentes.
